# EUROPEAN PATENT APPLICATION

(11) **EP 1 505 838 A2**
(43) Date of publication of application: **09.02.2005**
(21) Application number: 04103228.5
(22) Date of filing: 07.07.2004
(51) Int. Cl.: H04N 7/64, H04N 7/26, H04N 7/50

(54) **Automatically Detecting Errors in an Image Frame**

(30) Priority: 07.08.2003 KR 2003054664
(71) Applicant: Samsung Electronics Co., Ltd., Suwon-si Gyeonggi-do 442-742 (KR)
(72) Inventor: GU, Hyun-sung, Gyeonggi-do (KR)
(74) Representative: Read, Matthew Charles

(57) **Abstract**

The present invention relates to the detection of noise produced upon playing a moving picture. An apparatus for detecting defective elements comprises a block setting unit which receives a moving picture signal and divides a moving picture corresponding to the signal into one or more blocks, a defective element determination unit which receives the blocked moving picture and determines the defective elements for each block, and an error frame information storage unit which stores information on a frame containing the defective elements detected by the defective element determination unit.

## Description

The present invention relates to a method of, and corresponding apparatus for, automatically detecting errors in an image frame, comprising dividing the frame into a plurality of pixel blocks, each pixel having a value associated therewith.

As technology for processing audio and video signals has progressed, a variety of audio and video formats have been proposed. Similarly, storage media and playing devices for moving images in these formats have also been developed. Storage media include, for example, optical storage media such as a video compact disk (CD) or a digital video disk (DVD). Playing devices include DVD players, digital camcorders and the like. Digital camcorders use formats such as digital 8mm, DV mode (digital 6mm) and micro MV, while DVD players support MPEG2-PS format. These video formats are generally based on discrete cosine transformations (DCT), which are used to compress the image. This is based on a block structure made up of groups of 8*8 pixels. In the MPEG2 format, a macroblock structure of 16*16 pixels is also used. The 16*16 pixel block uses a time-compression technique. If an error such data loss occurs in the basic block (8*8) of the DCT or the macroblock (16*16), mosaic or block noise (hereinafter, referred to as a "defective element") is also produced.

Previously, the detection of defective elements has been done using the naked eye. It has been therefore difficult to accurately determine the occurrence of such defective elements, and specifically, to select the frame in which defective elements are present. Therefore, previously, it is necessary to measure the quality of the moving picture stored on the storage media or played by the playing device by automatically detecting whether the moving picture was stored without any defective elements or whether the moving picture playing device can play a stored moving picture without generating any defective elements. Such quality assurance measures are both time consuming and expensive.

The present invention aims to address the aforementioned problems. Accordingly, an object of the present invention is to provide an apparatus and method for automatically detecting defective elements in a moving picture and additionally storing and providing information on the frame(s) where the defective elements are produced.

The present invention relates to a method of automatically detecting errors in an image frame, comprising dividing the frame into a plurality of pixel blocks, each pixel having a value associated therewith.

A method according to the present invention is characterised by generating a boundary signal in accordance with the rate of change of pixel values across the boundary between adjacent blocks, generating a pixel distribution signal in accordance with the distribution of pixel data in at least part of the block, and generating an error signal, indicative of an error, in dependence on the boundary signal and the pixel distribution signal.

Also, the present invention relates to an apparatus for automatically detecting errors in an image frame, comprising means operable to divide the frame into a plurality of pixel blocks, each pixel having a value associated therewith.

An apparatus according to the present invention is characterised by means operable to generate a boundary signal in accordance with the rate of change of pixel values across the boundary between adjacent blocks, means operable to generate a pixel distribution signal in accordance with the distribution of pixel data in at least part of the block, and means operable to generate an error signal indicative of an error, the error being determined in accordance with the boundary signal and the pixel distribution signal.

This is advantageous because this allows the errors in the frames to be determined automatically, thus increasing the efficiency of the testing process in terms of both time and money.

An embodiment of the present invention will now be described, by way of example only, and with reference to the accompanying drawings, in which:
Figure 1 is a view illustrating a product production line to which an embodiment of the present invention can be applied;
Figure 2 is a block diagram of an inspection system that is arranged in the product production line of Figure 1 to inspect the quality of a moving picture;
Figure 3 is a block diagram of a hardware configuration of an apparatus for detecting defective elements according to an embodiment of the present invention;
Figure 4 is a block diagram of another inspection system to which the defective element detecting apparatus according to an embodiment of the present invention can be applied;
Figure 5 is a block diagram of an apparatus for detecting defective elements according to an embodiment of the present invention;
Figure 6 is a block diagram of an apparatus for detecting defective elements in a moving picture using a plurality of received video signals according to another embodiment of the present invention;
Figure 7 is a flowchart illustrating a method for detecting defective elements in a moving picture according to an embodiment of the present invention;
Figure 8 is a flowchart illustrating a process of setting blocks during an initialization step of detecting defective elements according to an embodiment of the present invention;
Figure 9 is a flowchart illustrating a process of inspecting the defective elements according to an embodiment of the present invention;
Figure 10 is a flowchart illustrating a process of providing results of the inspection for the defective elements according to an embodiment of the present invention;
Figure 11a is a view illustrating a graphic user interface for using a single received video signal to detect the defective elements according to an embodiment of the present invention;
Figure 11b is a view illustrating a picture on which defective elements detected by the defective element detection apparatus according to an embodiment of the present invention are shown; and
Figure 12 is a view illustrating a graphic user interface for using a plurality of received video signals to detect defective elements for each moving picture according to an embodiment of the present invention.

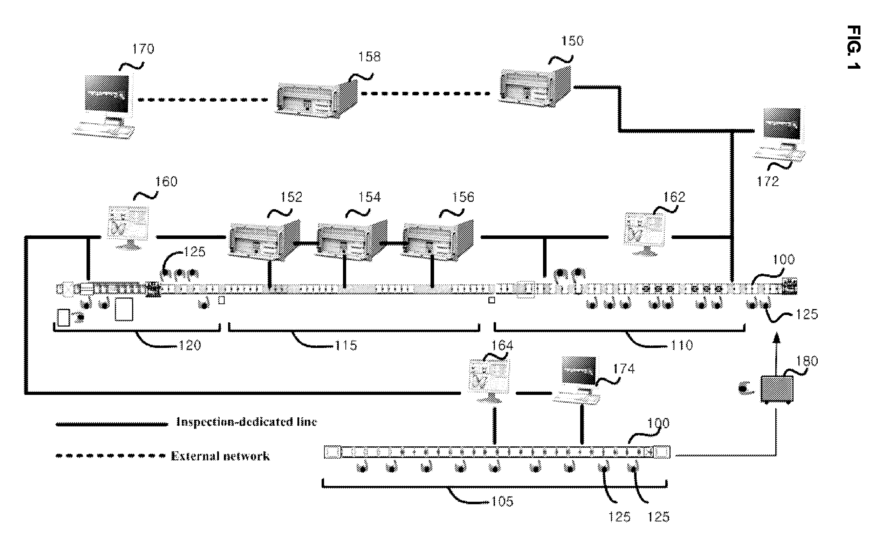

Figure 1 shows a production line in which an apparatus capable of playing a moving picture (hereinafter, referred to as "moving picture playing apparatus"), such as a video cassette recorder (VCR) or a digital video disk (DVD) player, is manufactured.

The production line 100 is generally divided into four processes: an assembly process 105, a finishing process 110, an inspection process 115 and a shipping process 120.

Work manual providing devices 160, 162 and 164 which provide work manuals containing information for workers (indicated generally at 125) are supplied at each process stage. Further, inspection systems 152, 154 and 156 for inspecting moving pictures and monitoring terminals 172 and 174 for monitoring information about each process stage, and a server 150 for managing and providing numerous information related to the production line 100 are also provided. The work manual providing devices 160, 162 and 164, the inspection systems 152, 154 and 156, monitoring terminals 172 and 174 and the server 150 are connected together through an inspection-dedicated line indicated by a solid line in Figure 1.

The server 150 is also connected to an external network (in addition to the inspection-dedicated line), allowing a user to have access to information related to the production line 100 through a monitoring terminal 170. This information is provided from outside the production line facility. A test condition editing apparatus 158 for registering or updating the contents of test conditions for inspection of the moving picture is also connected to the external network. Alternatively, the test condition editing apparatus 158 may be also connected to the inspection-dedicated line.

Respective process stages of the production line 100 shown in Figure 1 will be described in detail.

The assembly process 105 is the process of assembling components of a VCR or DVD player. After the components have been completely assembled, the assembled product is transferred to the finishing process 110 by means of a trolley 180.

During the finishing process 110, a moving picture playing apparatus is finished by operating the apparatus. This involves supplying the apparatus with electrical power and inserting a moving picture storage medium such as a videotape, DVD or video-CD is into the apparatus to inspect the moving picture that is produced. The integrity of the moving picture storage medium is then generally ensured.

The inspection process 115 is a process of inspecting whether the moving picture playing apparatus extracts data correctly from the moving picture storage medium and accordingly provides the moving picture. In other words, the finalised product is tested. This is the process to which the present invention can be applied.

In the shipping process 120, an apparatus which exhibits no errors during the inspection process 115 is packaged and a box label is then attached thereto. An apparatus in which errors were found during the inspection process 115 can be separately collected and managed.

Information on the assembly process 105, the finishing process 110, the inspection process 115 and the shipping process 120 can be shared, and distributed between, the respective processes through the inspection-dedicated line, and this information may be stored in the server 150.

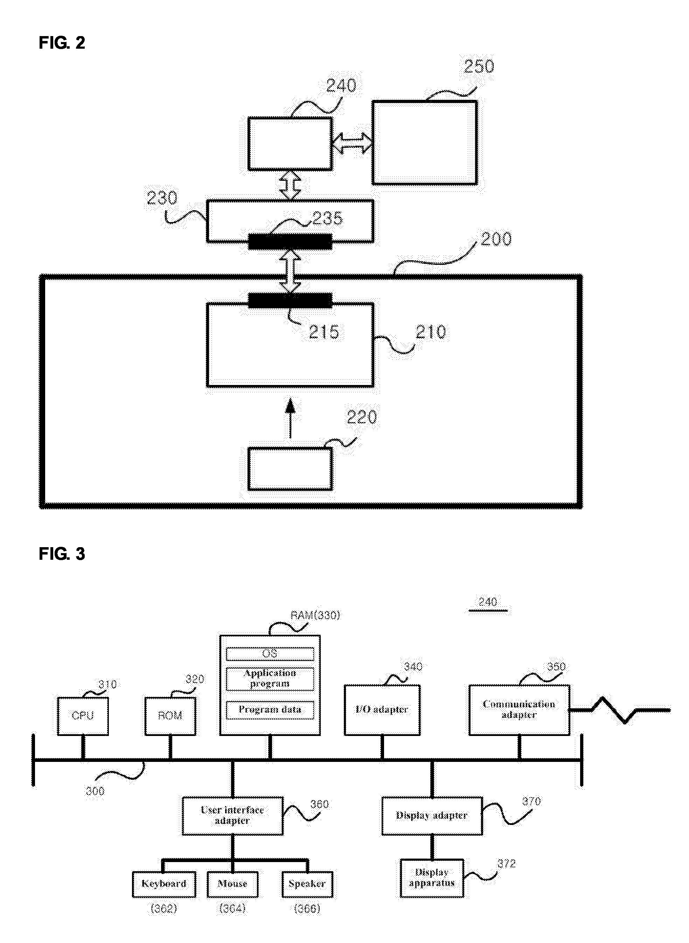

Referring to Figure 2, the inspection system preferably comprises a transport apparatus 200 such as a conveyer belt, a moving picture playing apparatus 210 having an output unit 215 for outputting audio/video signals, a control apparatus 220 for operating the moving picture playing apparatus 210, a signal distributor 230 having an interface unit 235 for receiving the audio/video signals from the output unit 215, a defective element detecting apparatus 240 for analyzing moving picture data received from the signal distributor 230 and then inspecting the moving picture quality, and a display apparatus 250 for providing an inspector with inspection results.

When the moving picture playing apparatus 210 is moved by means of the transport apparatus 200, the control apparatus 220 causes the moving picture playing apparatus 210 to operate allowing inspection of the quality of the produced moving image. The control apparatus 220 can be a wireless remote control. The wireless remote control may be directly manipulated by an inspector or automatically operated by setting, in advance, items requiring inspection. The items to test will be stored in the defective element detecting apparatus 240. The defective element detecting apparatus 240 is then connected to the wireless remote control. Alternatively, the inspection items can be first stored in the server 150 shown in Figure 1 and then transferred to the inspection systems 152, 154 and 156.

When the moving picture playing apparatus 210 operates, moving picture data is read from the moving picture storage medium that was loaded in the previous stage and the audio and/or video signals are then output through the output unit 215. The output signals are collected in the signal distributor 230 through the interface unit 235. Although it is not shown in Figure 2, the signal distributor 230 comprises two or more interface units 235 so that it can simultaneously collect the audio and/or video signals from a plurality of moving picture playing apparatuses.

The signal distributor 230 transmits the data provided by the moving picture apparatuses to the defective element detecting apparatus 240. Data communications can be implemented via a parallel interface or a high-speed serial interface such as IEEE1394.

The defective element detecting apparatus 240 analyses the moving picture data and determines whether the moving picture playing apparatus 210 reads out the moving picture data correctly. Further, the defective element detecting apparatus 240 provides the inspector with the current moving picture and the inspection results for the moving picture through the display apparatus 250. The display apparatus 250 may be a monitor, for example. When the defective element detecting apparatus 240 inspects two or more moving picture playing apparatuses, the display apparatus can split a screen into two or more regions so that inspection results for each moving picture playing apparatus can be provided to the inspector. This allows the inspector to simultaneously view a number of moving picture playing apparatuses. It is understood that the signal distributor 230 or the display unit 250 may be incorporated into the defective element detecting apparatus 240.

The inspection results collected by the defective element detecting apparatus 240 can be stored in the server 150 through the inspection-dedicated line indicated by the solid line of Figure 1.

Referring to Figure 3, the defective element detecting apparatus 240 comprises at least one central processing unit 310 (hereinafter, referred to as "CPU"). The CPU 310 is coupled to system memories 320 and 330 and various kinds of other components through a system bus 300. The system bus 300 can be any of several types of bus structures including a memory bus or memory controller, a peripheral bus, and a local bus using any of a variety of bus architectures. By way of example, such bus architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PSI) that is also known as Mezzanie bus. Read only memory 320 (hereinafter, referred to as "ROM") is connected to the system bus 300 and can be a basic input/output system (BIOS) for controlling all basic functions of the defective element detecting apparatus 240.

Further, Figure 3 shows an I/O adapter 340 and a communication adapter 350 that are coupled to the system bus 300. The I/O adapter 340 may be a Small Computer System Interface (SCSI) adapter for communicating with a hard disk or a tape storage device. The communication adapter 350 connects the external network and the system bus 300. This allows the defective element detecting apparatus 240 to communicate with the other systems on the network. A display apparatus 372 is connected to the system bus 300 through a display adapter 370 and comprises a graphic adapter to improve the performance of graphic intensive applications and a video controller. In a preferred embodiment, the adapters 340, 350 and 370 can be connected to at least one I/O bus that is connected to the system bus 300 through an intermediate bus bridge (not shown).

A user interface adapter 360 connects input devices such as a keyboard 362, mouse 364, speaker 366 and the like to the system bus 300.

The defective element detecting apparatus 240 receives the moving picture data from the signal distributor 230 shown in Figure 2 through the I/O adapter 340 or the communication adapter 350. The received moving picture data is analyzed by a computer (application) program that is stored in RAM 330. The computer program inspects the moving picture data. The moving picture that is currently being played can be shown to the inspector via the display adapter 370 and display apparatus 372.

Alternatively, information about the inspected moving picture can be stored in the hard disk via the I/O adapter 340 or stored in the server 150 through the inspection-dedicated line indicated by the solid line in Figure 1 via the communication adapter 350.

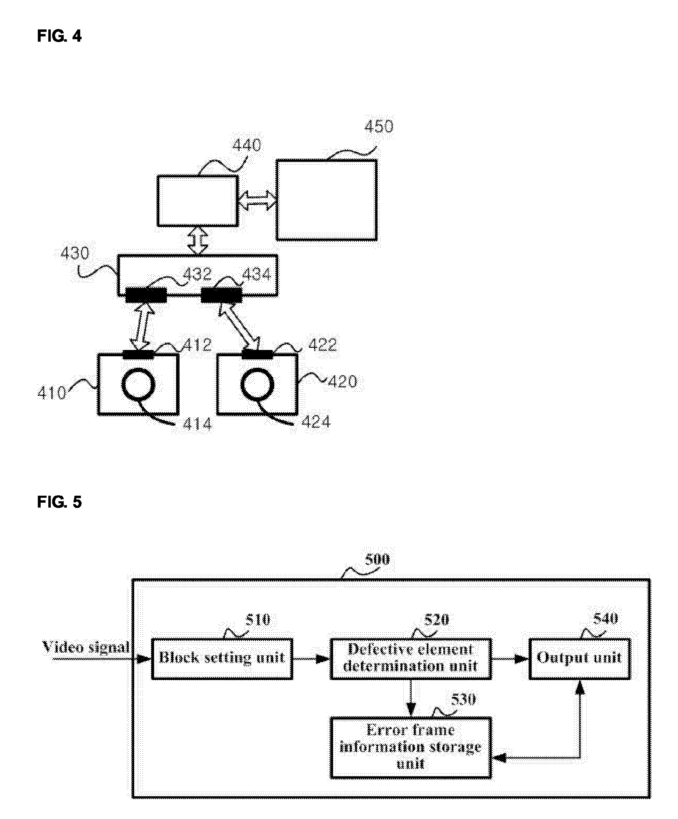

Referring to Figure 4, a system for playing moving picture data stored on a storage medium and then inspecting the quality of the storage medium is shown. It is necessary that the quality of the playing apparatus is maintained.

This inspection system comprises media playing apparatuses 410 and 420 each of which play moving picture data stored on storage media 414 and 424 and have output units 412 and 422 for outputting audio/video signals, a signal distributor 430 having interface units 432 and 434 for receiving the audio/video signals from the output units 412 and 422, respectively, a defective element detecting apparatus 440 for analyzing moving picture data received from the signal distributor 430 and inspecting the moving picture quality, and a display apparatus 450 for providing an inspector with inspection results.

Two or more medium playing apparatuses 410 and 420 into which the moving picture storage media 414 and 424 are loaded can be operated automatically or manually by the inspector. When the media playing apparatuses 410 and 420 operate, the audio/video signals are output through the output units 412 and 422. The process in which the output signals are processed through the signal distributor 430, the defective element detecting apparatus 440 and the display unit 450 are the same as the process illustrated in Figure 2. Similarly, the signal distributor 430 and/or display unit 450 can be incorporated into the defective element detecting apparatus 440.

Referring to Figure 5, the apparatus 500 for detecting defective elements in a moving picture can be implemented in the form of the defective elements detecting apparatus 240 or 440 shown in Figure 2 or 4, which uses hardware, software, or a combination thereof.

The defective element detecting apparatus 500 comprises a block setting unit 510 for receiving video signals representative of moving pictures, dividing the received moving picture into predetermined blocks and then extracting pixel information relating to a block. Further, a defective element determining unit 520 for comparing the pixel information for each block is provided. Also provided is an error frame information storage unit 530 for storing information about a frame in which one or more defective elements are located. The defective element determining unit 520 provides this information. An output unit 540 for supplying the inspector with comparison results obtained by the defective element decision unit 520 is also provided.

The block setting unit 510 receives video signals obtained by extracting stored moving pictures. Such information is provided on, for example, a DVD. It is understood that video signals from output terminals of a variety of apparatuses such as a DVD player or a digital camcorder may equally be used. After the block setting unit 510 has divided the received moving pictures into blocks, the defective element determination unit 520 determines whether defective elements exist in each block. The rate of change in values of pixels located at the boundary of each block and the pixel data distribution of the pixels in each block is used by the defective element determination unit 520 to determine if defective elements exist.

If the defective element determination unit 520 finds any defective elements, the information about the frame in which the defective elements are found is stored in the error frame information storage unit 530. Such information can contain time information detailing when the frame was played, image file information about the frame, the positional coordinate of any block where one or more defective elements are produced in the frame, and the like.

The output unit 540 displays the moving picture that is currently being played. To visually represent a block where any defective elements are produced, the interior of the error block can be indicated in black or the boundary of the error block can be displayed using a predetermined colour enabling differentiation between a block with a defective element and adjacent, non-defective, blocks.

Moreover, the output unit 540 can provide a graphical user interface to display frame information stored in the error frame information storage unit 530.

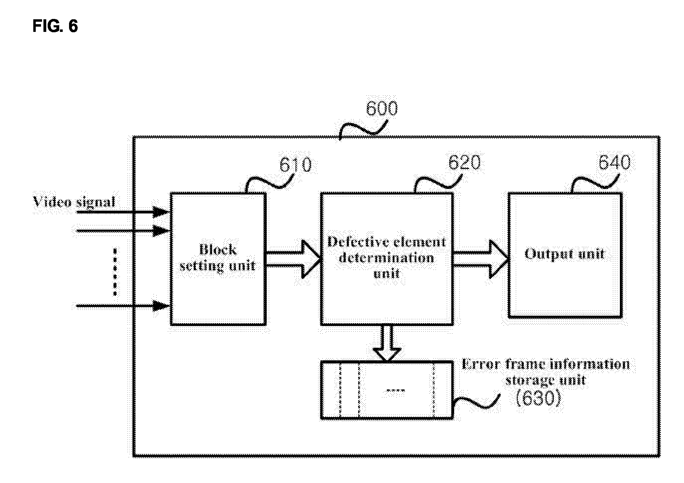

Referring to Figure 6, the block setting unit 610 can receive one or more video signals as an input and determine defective elements for a plurality of simultaneous video signals. The block setting unit 610 comprises an interface card for inputting and outputting a plurality of video signals. Alternatively, a parallel interface card or IEEE1394 high-speed serial interface card can be used.

The operation of the apparatus shown in Figure 6 is the same as that shown in Figure 5. Also, an error frame information storage unit 630 can divide error frame information storage amongst the number of video signals received by the block setting unit 610 and then manage the divided spaces as a whole. Further, an output unit 640 can divide the moving picture displayed on the screen by the number of video signals input to the block setting unit 610 and thus simultaneously display the moving pictures.

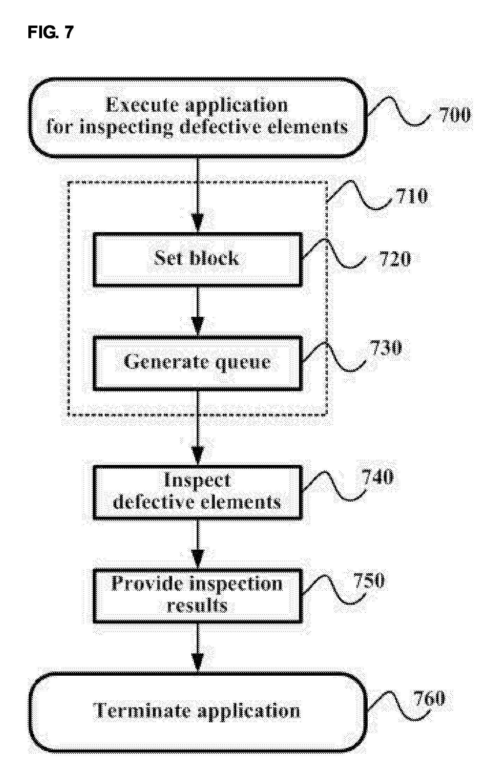

Referring to Figure 7, when an inspector executes a program used in inspecting defective elements (700), a process 710 for initialising the program to perform the inspection is commenced. The initialisation process 710 comprises a process 720 of determining the size of the pixel block to be generated thus allowing a frame to be inspected. A process 730 for generating a queue that temporarily stores the frames is commenced which allows the extraction of frames in which any defective elements are present.

After the settings required for inspecting defective elements in the program initialization process 710 have been completed, the process of inspecting defective elements is carried out (740). Whenever the inspection of frames containing defective elements is completed, the program provides the inspector with the inspection results (750). The process of inspecting the defective elements is terminated either by the inspector or at the end the playing of the moving picture (760).

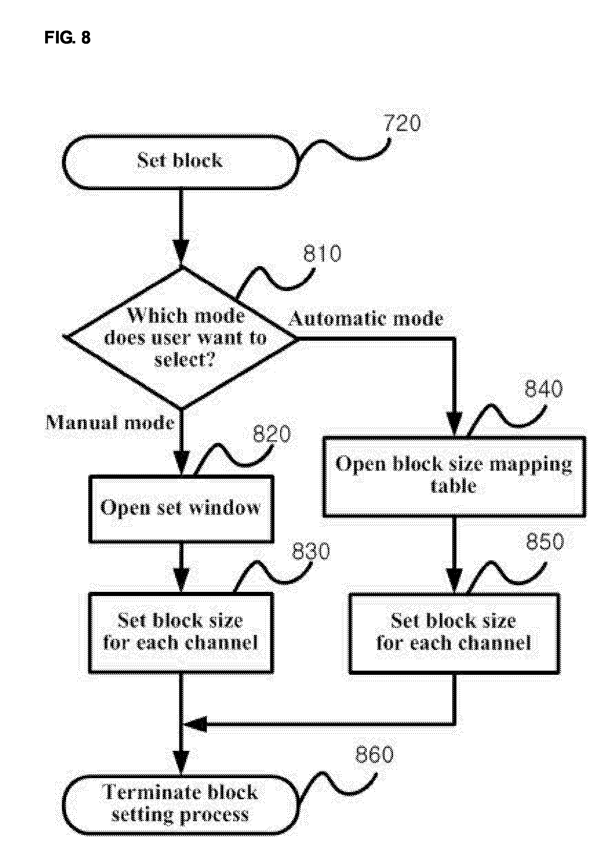

Referring to Figure 8, the block setting process is divided into a manual mode in which blocks are set by the inspector and an automatic mode in which blocks are automatically set using a database.

In the case of manual mode, the program for defective element detection provides a predetermined means for setting a block. The setting means can be either a menu provided in the determination of the block setting or as an additional window. When the block setting window is opened (820), the inspector determines and sets the block size for each channel according to identification information used to identify the moving picture playing apparatus or storage medium and whether to set the moving picture to be played using 8 by 8 pixel blocks or using 16 by 16 pixel blocks (830). In other words, as shown in Figure 6, in a case where a plurality of moving picture signals are input (from a number of devices), the size of block for each signal is determined individually.

Alternatively, in the case of automatic mode, a table is opened (840). This table contains information allowing the mapping of block size and the device to be inspected. The mapping table is loaded into the server 150 of Figure 1 by the inspector and then subsequently loaded into the RAM 330 of the defective element detecting apparatus shown in Figure 3. The mapping table contains identification information about the device to be inspected such as the various kinds of storage media onto which moving picture data is recorded, the DVD player or VCR and the like, as well as information about the block size of the moving picture corresponding to the identification information. Such identification information can be registered in advance in the server 150 by means of a barcode or i-button (a microchip containing unique information about the device) during the initial stage of the production line 100 shown in Figure 1. When the mapping table is opened, the block size is automatically set for each channel (850) on which the moving picture signals are input. The block setting process is then terminated (860).

The mode setting 810 can be defined or updated in advance by the inspector.

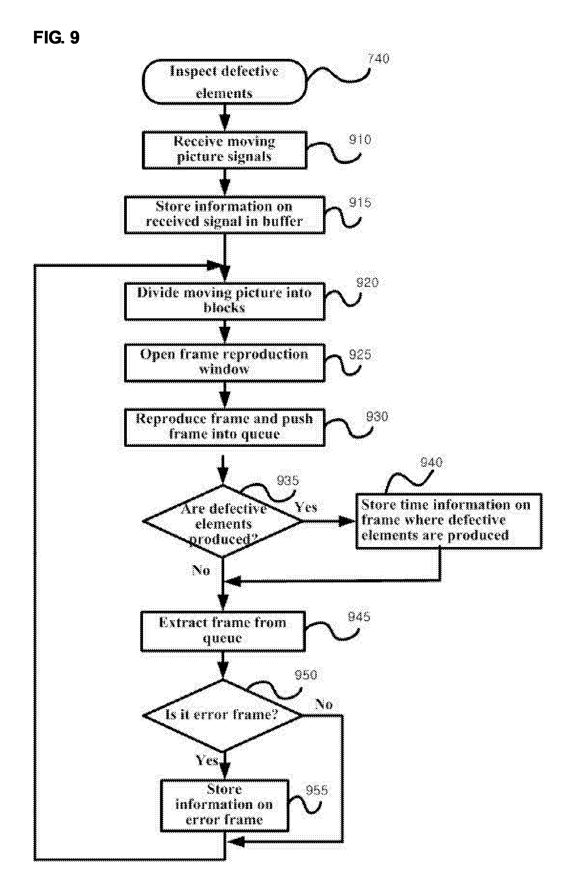

Referring to Figure 9, after the program initialization process 710 has been completed, the moving pictures are inspected for defective elements (740).

When the defective element detecting apparatus receives moving picture signals (910), data information about the received signals is temporarily stored in a buffer (915). The buffer functions to coordinate the processing speed of the program for inspecting the defective elements and the speed at which the moving picture signals are input. The buffer is preferably located in the RAM 330 of the defective element detecting apparatus shown in Figure 3. In a case where a plurality of moving picture signals are received, a plurality of buffers corresponding to the number of received signals can be used.

The application program extracts the moving picture data from the buffer as a frame and then divides the extracted frame into blocks; the size of which was previously set in the program initialization process 710 (920). Thereafter, the application opens the window for playing the frame and displays the moving picture being played to the inspector (930).

The application program stores each frame being played in the queue generated during the program initialization process 710 (930). Information relating to the frame can also be stored in the queue. The frame information includes, but is not limited to, time information about when the frame was played, image file information about the frame, information on the block size of the frame, and the like. Further, in a case where a plurality of moving picture signals are input as shown in Figure 6, a plurality of queues corresponding to each of the received signals can be employed. The queues are preferably located in the RAM 330 of the defective element detecting apparatus shown in Figure 3.

The application program then determines whether defective elements are present in any frame (935). For frames in which defective elements have been detected, time information about when the frame containing defective elements was played is separately stored (940). The time information is synchronized with the time information that was already stored in the queue in step 930.

The application program (or any function or thread processor generated by the application program) sequentially extracts the frames from the queue (945). Since the frames containing the same time information as stored in step 940 are the frames containing defective elements, they are considered as error frames. In such a case, the frame information of the error frames is additionally stored (955). This frame information can replace, and therefore become, the frame information stored in the queue in step 930. After the defective element inspection for one frame has been completed, the next frame is extracted from the moving picture data information stored in the buffer in step 915 and steps 915 to 955 will be repeated for this frame.

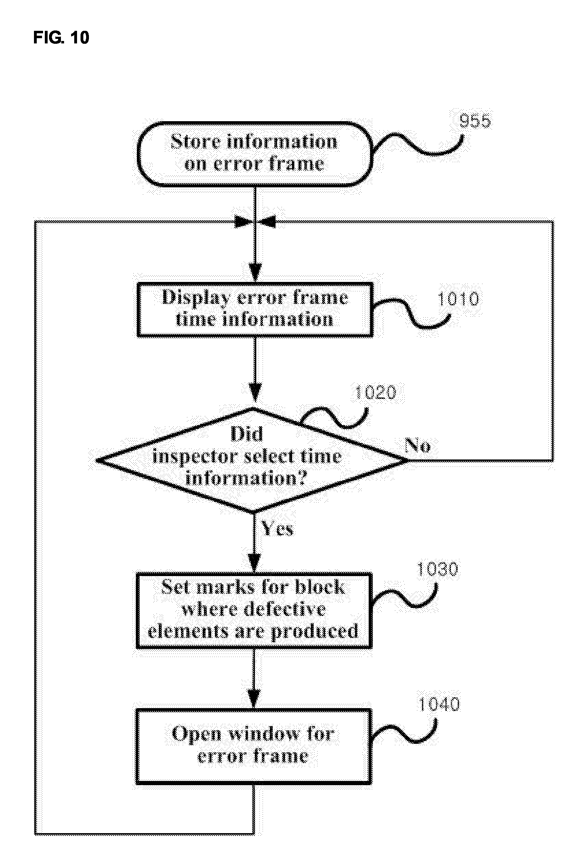

Referring to Figure 10, the inspector can confirm the results of the defective element inspection using the error frame information stored in step 955.

The application for detecting the defective elements sequentially displays time information on the stored error frames in the form of a graphic user interface or text according to the playing time of the frames (1010). If the inspector selects this time information, a block where defective elements are present is marked or represented so that the inspector can easily identify the block (1030). For example, the boundary of the block where defective elements are produced can be indicated by a solid coloured line. The colour of the solid line can be predetermined or can be selected by the inspector through the use of an additionally created window, thus enabling easy identification of the relevant block. Position information about the block where one or more of the defective elements are produced can be obtained using the block size information and the image file information stored among the error frame information. The position information can employ an x-y scalar coordinate or a vector coordinate.

If the block where the defective elements are present needs identifying, the application creates an additional window and provides an image file for the error frame in which the block is indicated (1040).

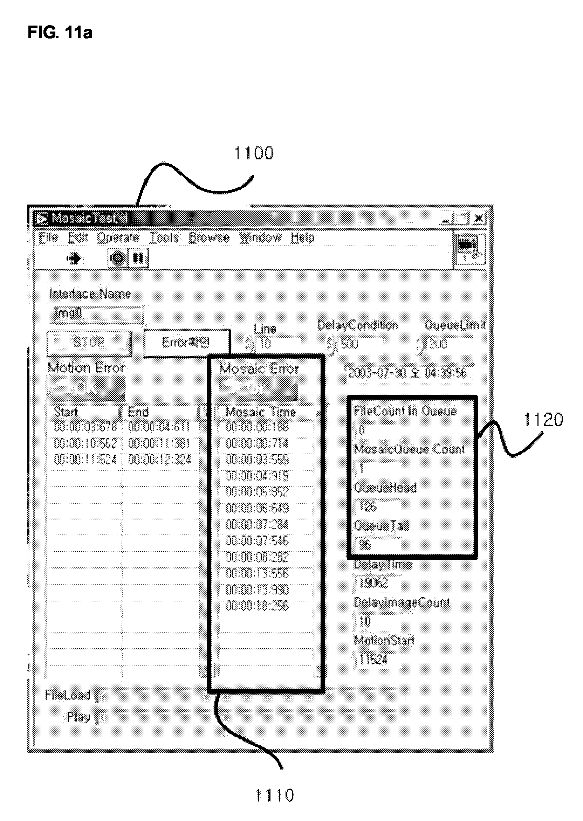

Referring to Figure 11a, the graphic user interface 1100 comprises a region 1110 on which the time of playing of a frame containing one or more defective elements is displayed, and a region 1120 on which information for the queue for temporarily storing the frame to extract the frame where defective elements are produced is displayed.

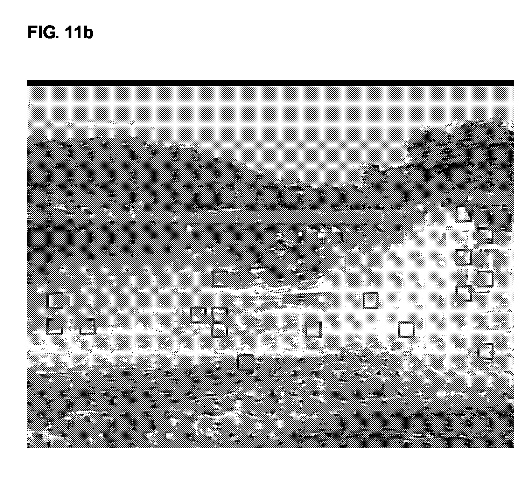

The region 1110 indicating the time information is implemented in step 1010 shown in Figure 10. In other words, when the inspector clicks on time information represented in the region 1110, the application that displayed the graphic user interface 1100 performs steps 1030 and 1040 of Figure 10 which provides the inspector with an image file of the frame corresponding to clicked time information. This image file will be displayed in an additionally created window as shown in Figure 11b.

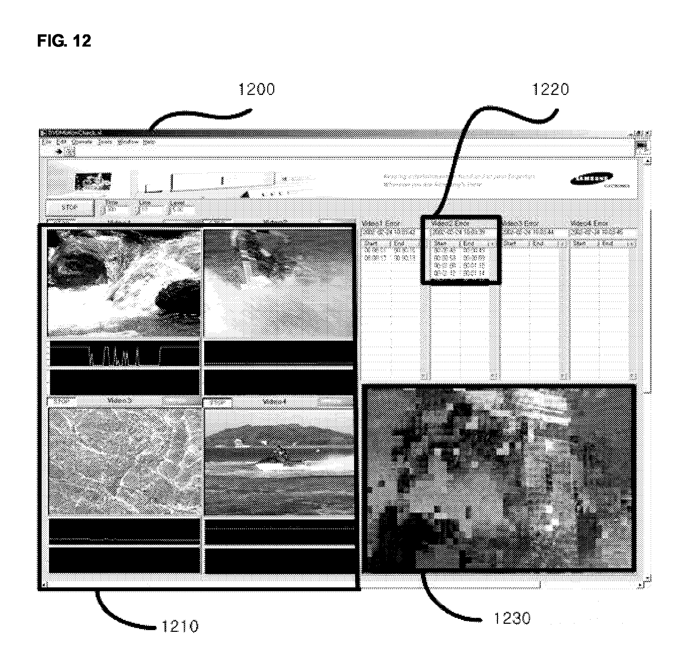

Referring to Figure 12, the graphic user interface 1200 comprises a region 1210 on which a moving picture that is currently being played is displayed, a region 1220 on which time information of a frame where defective elements are produced is displayed, and a region 1230 on which an image of the frame where defective elements are detected is displayed.

As illustrated in Figure 12, the moving pictures for all four video sources from video-1 to video-4 are shown in the region 1210 and the results of detecting defective elements for the four moving pictures are displayed in the region 1220. In other words, the time information region 1220 shows error start time and error end time of a frame where defective elements are produced as defective element detection results. The image region 1230 shows the image of the recently detected error frame. Similarly, when the inspector clicks any time information shown in the time information region 1220, the application that has executed the graphic user interface 1200 performs steps 1030 and 1040 of Figure 10 to provide the inspector with the image file of the frame corresponding to clicked time information through the window as shown in Figure 11b.

According to the present invention as described above, the inspector can automatically confirm the defective elements in the moving picture by using the apparatus and method for detecting the defective elements produced when the moving picture is played. Further, the accuracy of the inspection results and reliability of the moving picture can be improved by additionally storing the information on the frame where defective elements are produced. Furthermore, there is an advantage in that the unmanned automatic inspection can be made.

## Claims

1. An apparatus for detecting defective elements in a moving picture, comprising:
a block setting unit which receives a moving picture signal and divides a moving picture corresponding to the signal into one or more blocks;
a defective element determination unit which receives the blocked moving picture and determines the defective elements for each block; and
an error frame information storage unit which stores information on a frame containing the defective elements detected by the defective element determination unit.

2. The apparatus as claimed in claim 1, wherein the moving picture signal is a monochrome video signal.

3. The apparatus as claimed in claim 1, wherein the block setting unit comprises:
an interface card capable of receiving two or more video signals.

4. The apparatus as claimed in claim 1, wherein the defective element determination unit determines the defective elements using a rate of change in values of pixels located at the boundary of each block and pixel data distribution of the pixels within the block.

5. The apparatus as claimed in claim 1, wherein the frame information is information on the times when the defective elements are produced.

6. The apparatus as claimed in claim 1, wherein the frame information is a positional coordinate of a block where a defective element is produced.

7. The apparatus as claimed in claim 1, wherein the frame information is information on an image file of at least one frame where a defective element is produced.

8. The apparatus as claimed in claim 1, further comprising an output unit for providing the moving picture frame where the defective elements are produced in the form of a graphic user interface.

9. The apparatus as claimed in claim 8, wherein the graphic user interface comprises:
a region on which a moving picture that is currently being played is represented and a region on which time when the defective elements have been detected is represented.

10. The apparatus as claimed in claim 9, wherein the graphic user interface further comprises:
a region on which an image corresponding to the time selected by a user is provided.

11. The apparatus as claimed in claim 10, wherein the image is an image in which a boundary line of a block where the defective elements are produced is represented in color.

12. A method of detecting defective elements in a moving picture, comprising the steps of:
(1) receiving a moving picture signal and dividing a moving picture corresponding to the signal into one or more blocks;
(2) detecting the defective elements, if any, for each block; and
(3) storing, when the defective elements are detected in step (2), information on a frame where the defective elements are produced.

13. The method as claimed in claim 12, wherein the moving picture signal is a monochrome video signal.

14. The method as claimed in claim 12, wherein step (2) comprises the step of:
determining the defective element using a rate of change in values of pixels located at the boundary of each block and pixel data distribution of the pixels within the block.

15. The method as claimed in claim 12, wherein the frame information is information on the time when the defective elements are produced.

16. The method as claimed in claim 12, wherein the frame information is a positional coordinate of the block where the defective elements are produced.

17. The method as claimed in claim 12, wherein the frame information is information on an image file of the frame where the defective elements are produced.

18. The method as claimed in claim 12, further comprising the step of providing the moving picture frame where the defective elements are produced in the form of a graphic user interface.

19. The method as claimed in claim 18, wherein the graphic user interface comprises a region on which a moving picture that is currently played is represented and a region on which times when the defective elements have been detected are represented.

20. The method as claimed in claim 19, wherein the graphic user interface further comprises:
a region on which an image corresponding to a time selected by a user is provided.

21. The method as claimed in claim 20, wherein the image is an image in which a boundary line of a block where the defective elements are produced is represented in color.

22. The method as claimed in claim 18, wherein the graphic user interface comprises:
a region on which moving pictures from respective ones of a plurality of input channels are represented, and a region on which respective times when defective elements have been detected in the input channels are represented.

23. The method as claimed in claim 12, wherein step (1) comprises the step of:
setting block size for an input channel according to identification information used to identify the moving picture playing apparatus or storage medium corresponding to the input channel.

24. The method as claimed in claim 23, wherein the moving picture playing apparatus is selected from the group consisting of a DVD player and a digital camcorder, and the storage medium is selected from the group consisting of a video compact disk (CD) and a digital video disk (DVD).

25. The method as claimed in claim 23, wherein the block size is set to one of 8 by 8 pixel blocks or 16 by 16 pixel blocks.

26. The method as claimed in claim 12, wherein step (1) comprises the step of:
setting block size in one of a manual mode and an automatic mode, the automatic mode employing a mapping table comprising identification information on the source of the moving picture signal such as various kinds of storage mediums on which moving picture data are recorded, a DVD player, or a VCR, and information on the block size of the moving picture corresponding to the identification information, the block size being automatically set for each channel to which the moving picture signals are input when the mapping table is opened.

27. A method of automatically detecting errors in an image frame (1230), comprising:
dividing the frame (1230) into a plurality of pixel blocks, each pixel having a value associated therewith, **characterised by:**
generating a boundary signal in accordance with the rate of change of pixel values across the boundary between adjacent blocks;
generating a pixel distribution signal in accordance with the distribution of pixel data in at least part of the block; and
generating an error signal, indicative of an error, in dependence on the boundary signal and the pixel distribution signal.

28. A method in accordance with claim 27, comprising:
storing information defining the location of the defective block indicated by the error signal.

29. A method in accordance with claim 28, comprising:
displaying a frame (1230) having the error, wherein the location of the error within the frame is indicated in accordance with the stored information.

30. A signal containing a computer programming code for controlling a computer to perform the method according to any one of claims 27, 28 or 29.

31. A storage medium having the signal according to claim 30 recorded therein or thereon.

32. An apparatus (520) for automatically detecting errors in an image frame (1230), comprising:
means (510) operable to divide the frame into a plurality of pixel blocks, each pixel having a value associated therewith, **characterised by:**
means operable to generate a boundary signal in accordance with the rate of change of pixel values across the boundary between adjacent blocks;
means operable to generate a pixel distribution signal in accordance with the distribution of pixel data in at least part of the block; and
means operable to generate an error signal indicative of an error, the error being determined in accordance with the boundary signal and the pixel distribution signal.

33. An apparatus in accordance with claim 32, comprising:
storage means (630) operable to store information defining the location of the defective block indicated by the error signal.

34. An apparatus in accordance with either one of claims 32 or 33, comprising:
means (640) operable to display a frame having the error, wherein the location of the error within the frame is indicated in accordance with the stored information.
